# EUROPÄISCHE PATENTANMELDUNG

(11) **EP 3 896 267 A1**
(43) Veröffentlichungstag der Anmeldung: **20.10.2021**
(21) Anmeldenummer: 20170115.8
(22) Anmeldetag: 17.04.2020
(51) Int. Cl.: F02B 25/04, F02B 25/20, F02F 1/24, F01L 3/00, F02B 43/00, F02B 75/02, F02F 1/42

(54) **LÄNGSGESPÜLTER GROSSMOTOR**

(71) Anmelder: Winterthur Gas & Diesel AG, 8401 Winterthur (CH)
(72) Erfinder: Imhasly, David, 8400 Winterthur (CH); Alder, Roland, 8405 Winterthur (CH)
(74) Vertreter: IPS Irsch AG

(57) **Zusammenfassung**

Es wird ein längsgespülter Grossmotor vorgeschlagen, mit mindestens einem Zylinder (10), in welchem ein Kolben (60) entlang einer Zylinderachse (X) hin und her bewegbar angeordnet ist, mit einem Zylinderdeckel (20), welcher gemeinsam mit dem Kolben (60) einen Brennraum (120) für einen Brennstoff begrenzt, wobei der Grossmotor für den Betrieb in einem Gasmodus ausgestaltet ist, in welchem ein vorgemischtes Luft-Brennstoff-Gemisch im Brennraum (120) verbrannt wird, wobei im Zylinderdeckel (20) eine Mehrzahl von Auslassventilen (40) zum Ausbringen von Abgasen aus dem Brennraum (120) vorgesehen ist, und wobei zwischen zwei benachbarten Auslassventilen (40) jeweils eine Erhebung am Zylinderdeckel (20) vorgesehen ist, welche sich in den Brennraum (120) hinein erstreckt.

## Beschreibung

Die Erfindung betrifft einen längsgespülten Grossmotor gemäss dem Oberbegriff des unabhängigen Patentanspruchs der jeweiligen Kategorie.

Grossmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Ein weiterer wichtiger Punkt ist seit einigen Jahren mit zunehmender Bedeutung die Energieeffizienz sowie die Qualität der Abgase, insbesondere die Stickoxid Konzentration in den Abgasen oder die Belastung mit Schwefel. Ein weiteres Problem stellen unverbrannte Kohlenwasserstoffe dar, beispielsweise der Methan-Schlupf.

Hier werden die rechtlichen Vorgaben und Grenzwerte für die entsprechenden Abgasgrenzwerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen, beispielsweise Erdgas, problematischer wird, weil die Einhaltung der Abgasgrenzwerte immer schwieriger, technisch aufwendiger und damit teurer wird.

Unter den Aspekten des wirtschaftlichen und effizienten Betriebs, der Einhaltung von Abgasgrenzwerten und der Verfügbarkeit von Ressourcen sucht man daher nach Alternativen zum klassischerweise als Brennstoff für Grossmotoren verwendeten Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrigbleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Dies sind im Wesentlichen Emulsionen aus einem schweren Kohlenwasserstoff, z. B. Bitumen, Schweröl oder ähnliches, und Wasser, die in speziellen Verfahren hergestellt werden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgases wie LNG (liquefied natural gas) bekannt.

Eine ebenfalls bekannte Alternative zum reinen Betrieb mit Schweröl ist es, Grossmotoren so auszugestalten, dass sie mit zwei oder noch mehr unterschiedlichen Brennstoffen betrieben werden können, wobei der Motor je nach Betriebssituation oder Umgebung entweder mit dem einen Brennstoff oder mit dem anderen Brennstoff betrieben wird. Ein solcher Grossmotor, der auch als Multi-Fuel Grossmotor bezeichnet wird, kann während des Betriebs von einem ersten Modus, in welchem ein erster Brennstoff verbrannt wird, in einen zweiten Modus, in welchem ein zweiter Brennstoff verbrannt wird, umgeschaltet werden und umgekehrt.

Eine bekannte Ausgestaltung eines Grossmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein gasförmiger Brennstoff, z.B. Erdgas oder Methan, zur Verbrennung in den Brennraum eingebracht wird, und andererseits in einem Flüssigmodus, in welchem ein flüssiger Brennstoff wie Schweröl oder ein anderer flüssiger Brennstoff in demselben Motor verbrannt werden können. Diese Grossmotoren können dabei sowohl Zweitakt- als auch Viertaktmotoren sein, insbesondere auch längsgespülte Zweitakt-Grossdieselmotoren.

Es sind auch solche Grossmotoren bekannt, die mit zwei unterschiedlichen flüssigen Brennstoffen betrieben werden können, wobei dabei üblicherweise beide Brennstoffe vorrätig sind, sodass der Motor auch während des Betriebs entweder mit dem ersten oder mit dem zweiten Brennstoff betreibbar ist. Auch sind Ausführungsformen bekannt, bei denen beide Brennstoffe im gleichen Arbeitszyklus des Grossmotors in den Brennraum eingebracht werden.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen Brennstoff-Luft-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Bei den oben genannten Dual-Fuel Motoren ist es beispielsweise für den Gasmodus bekannt, das Gas im gasförmigen Zustand mit der Spülluft zu vermischen, um so im Brennraum des Zylinders ein zündfähiges Gemisch zu erzeugen. Bei diesem Niederdruckverfahren erfolgt dann die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt.

Ferner sind auch Mischformen aus dem Ottobetrieb und dem Dieselbetrieb bekannt.

Weiterhin sind Grossmotoren bekannt, die als Gasmotoren ausgestaltet sind. Diese Gasmotoren sind nur für den reinen Gasbetrieb ausgestaltet. Beispielsweise kann ein Gasmotor so ausgestaltet sein, dass sein Betrieb dem Betrieb einen Dual-Fuel Motors im Gasmodus entspricht. Gasmotoren arbeiten üblicherweise im Ottobetrieb. Ein bevorzugter Brennstoff für Gasmotoren ist beispielsweise Erdgas.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel oder Multi-Fuel Grossmotoren, die ausser im Dieselbetrieb auch noch in einem anderen Betrieb, beispielsweise dem Otto-Betrieb, betreibbar sind.

Bei einem längsgespülten Grossmotor hat typischerweise jeder Zylinder Spülluftöffnungen, die am unteren Ende des Zylinders bzw. des Zylinderliners vorgesehen sind, und mindestens ein Auslassventil zum Abführen von Abgasen, welches am oberen Ende des Zylinders, beispielsweise im Zylinderdeckel vorgesehen ist. Durch die Spülluftöffnungen wird dem Brennraum des Zylinders frische Spül- oder Ladeluft zugeführt, welche für den Verbrennungsprozess benötigt wird. Üblicherweise werden die Spülluftöffnungen des Zylinders durch die Bewegung des Kolbens geöffnet bzw. verschlossen. Wenn sich der Kolben während eines Arbeitszyklus und während seiner Abwärtsbewegung dem unteren Totpunkt nähert, so werden durch den Kolben die Spülluftöffnungen freigegeben, sodass die Spül- oder Ladeluft in den Zylinder einströmen kann. Bei der anschliessenden Aufwärtsbewegung des Kolbens verschliesst dieser dann die Spülluftöffnungen, sodass keine weitere Spülluft mehr in den Zylinder eingebracht werden kann.

Während des Spülens des Zylinders strömt also frische Spülluft durch die Spülluftöffnungen in den Zylinder ein und ersetzt dort die heissen Abgase, welche vom vorgängigen Verbrennungsprozess im Zylinder verblieben sind. Diese Abgase werden durch das Auslassventil ausgetragen. Dieser Spülvorgang ist üblicherweise nicht perfekt, das heisst eine gewisse Menge der Abgase verbleibt im Zylinder. Diese Menge der im Zylinder verbleibenden Abgase hängt von dem Strömungsmuster bzw. dem Strömungsprofil im Zylinder ab. Auch kommt es zu einer teilweisen Vermischung der heissen Abgase mit der frischen Spülluft, wodurch sich die für den nächsten Verbrennungsprozess zur Verfügung stehende Luft im Zylinder erwärmt.

Insbesondere wenn der Grossmotor in einem Gasmodus betrieben wird, in welchem ein vorgemischtes Luft-Brennstoff-Gemisch im Brennraum fremdgezündet werden soll, kann diese Erwärmung der Luft zu einer unerwünschten Selbstzündung des Luft-Brennstoff-Gemisches im Zylinder führen, was zu sehr hohen mechanischen Belastungen und zu stark erhöhten Emissionswerten führen kann. Zudem kann die Erhöhung der Lufttemperatur im Zylinder dazu führen, dass der fremdgezündete Verbrennungsprozess zu schnell abläuft (fast combustion), was ebenfalls zu hohen mechanischen Belastungen und hohen Emissionswerten führt.

Es ist daher insbesondere für die Verbrennung eines vorgemischten Luft-Brennstoff-Gemisches wesentlich, die im Zylinder verbleibende Menge der Abgase und die Temperatur der Spülluft im Zylinder möglichst gut kontrollieren zu können, um einen möglichst effizienten und schadstoffarmen Betrieb des Grossmotors zu gewährleisten.

Bei einem längsgespülten Grossmotor ist das Strömungsprofil hauptsächlich durch die Spülluftöffnungen und das Auslassventil bestimmt. Während man die Anordnung und die Ausgestaltung der Spülluftöffnungen bereits sehr weitgehend optimieren konnte, besteht im Bereich des Abgasauslasses noch deutliches Verbesserungsbedürfnis. Heutzutage ist es bei längsgespülten Grossmotoren eine übliche Ausgestaltung, ein Auslassventil vorzusehen, welches zentral im Zylinderdeckel angeordnet ist. Dieses zentral angeordnete Auslassventil reduziert deutlich die Strömungsgeschwindigkeit der Abgase im Zentrum des Zylinders, wodurch sich unterhalb des Auslassventils eine erhebliche Menge Abgase ansammelt. Über den Querschnitt des Zylinders gesehen ist die Strömungsgeschwindigkeit im Zentrum des Zylinders deutlich geringer als in den radial aussenliegenden Bereichen des Zylinders.

Um dieses Problem anzugehen, ist bereits versucht worden, in einem längsgespülten Zylinder mehrere Auslassventile vorzusehen, um dadurch ein günstigeres Strömungsprofil zu kreieren, welches die Menge der im Zylinder verbleibenden Abgase reduziert. Hier besteht weiterhin Verbesserungsbedarf.

Ausgehend von diesem Stand der Technik ist es daher eine Aufgabe der Erfindung, einen längsgespülten Grossmotor vorzuschlagen, der eine zuverlässigere Spülung ermöglicht, bei welcher die Menge der im Zylinder verbleibenden Abgase besser kontrolliert und insbesondere reduziert werden kann, ohne dass dafür eine deutlich erhöhter Spülluftmenge benötigt wird, sodass der Grossmotor möglichst wirtschaftlich und mit geringen Emissionswerten betreibbar ist.

Der diese Aufgabe lösende Gegenstand der Erfindung ist durch die Merkmale des unabhängigen Patentanspruchs gekennzeichnet.

Erfindungsgemäss wird also ein längsgespülter Grossmotor vorgeschlagen, mit mindestens einem Zylinder, in welchem ein Kolben entlang einer Zylinderachse hin und her bewegbar angeordnet ist, mit einem Zylinderdeckel, welcher gemeinsam mit dem Kolben einen Brennraum für einen Brennstoff begrenzt, wobei der Grossmotor für den Betrieb in einem Gasmodus ausgestaltet ist, in welchem ein vorgemischtes Luft-Brennstoff-Gemisch im Brennraum verbrannt wird, wobei im Zylinderdeckel eine Mehrzahl von Auslassventilen zum Ausbringen von Abgasen aus dem Brennraum vorgesehen ist, und wobei zwischen zwei benachbarten Auslassventilen jeweils eine Erhebung am Zylinderdeckel vorgesehen ist, welche sich in den Brennraum hinein erstreckt.

Durch die Kombination aus der Mehrzahl von Auslassventilen mit den dazwischen angeordneten Erhebungen wird ein besonders günstiges Strömungsprofil im Zylinder erreicht, mit welchem sich die Menge der im Zylinder verbleibenden Abgase ganz erheblich reduzieren lässt. Über den Querschnitt des Zylinders gesehen, ist das Strömungsprofil deutlich flacher bzw. homogener, das heisst es werden im Brennraum solche Zonen vermieden oder zumindest deutlich reduziert, die eine sehr geringe Strömungsgeschwindigkeit aufweisen. Durch diese näherungsweise Homogenisierung der Strömungsgeschwindigkeit über den Zylinderquerschnitt, werden die Abgase in zuverlässiger Weise aus allen Bereichen des Brennraums ausgetragen. Zudem wird die Übergangszone zwischen der frischen Spülluft und den auszutragenden Abgasen viel schmaler bzw. kleiner, d.h. der Übergang von der Spülluft auf die Abgase ist deutlich schärfer und weniger verschmiert. Folglich ist auch der Wärmeübertrag von den Abgasen auf die frische Spülluft erheblich reduziert.

Durch diesen deutlich schärferen Übergang zwischen der frischen Spülluft und den Abgasen wird es zudem möglich, den Zeitpunkt bzw. die Zeitpunkte für das Schliessen der Auslassventile viel besser an diese schärfere Übergangszone anzupassen, sodass insgesamt mehr Abgase aus dem Brennraum ausgetragen werden und mehr frische Spülluft im Zylinder verbleibt.

Aus dem deutlich reduzierten Wärmeübertrag zwischen den heissen Abgasen und der erheblich kühleren Spülluft resultieren zwei weitere Vorteile: zum einen wird das Risiko unerwünschter Selbstzündungen des Luft-Brennstoff-Gemisches signifikant reduziert, und zum anderen verbessert die höhere Temperatur der Abgase die Wirkung bzw. die Effizienz nachgeschalteter Abgasreinigungsanlagen, wie beispielsweise eines Oxidationskatalysators für Methan oder einer SCR-Vorrichtung (SCR: selective catalytic reduction).

Gemäss einer bevorzugten Ausführungsform weist der Zylinder vier Auslassventile auf, welche in dem Zylinderdeckel angeordnet sind.

Dabei ist es bevorzugt, dass die vier Auslassventile in einer rechteckigen Struktur angeordnet sind.

Um die Zonen mit niedriger Strömungsgeschwindigkeit im Brennraum besonders effizient zu reduzieren, ist es vorteilhaft, dass sich jede Erhebung in einer radialen Richtung auf die Zylinderachse zu erstreckt.

Bevorzugt ist jede Erhebung derart ausgestalte, dass ihre Höhe gemessen senkrecht zur radialen Richtung auf die Zylinderachse hin gesehen abnimmt.

Ferner ist es bevorzugt, dass jede Erhebung derart ausgestaltet ist, dass ihre Breite gemessen senkrecht zur radialen Richtung auf die Zylinderachse hin gesehen abnimmt.

Vorzugsweise ist dazu jede Erhebung im Wesentlichen als Tetraeder ausgestaltet, wobei die Grundfläche des Tetraeders jeweils radial aussenliegend angeordnet ist und der Scheitelpunkt des Tetraeders radial innenliegend angeordnet ist, sodass die Erhebungen mit ihrem Scheitelpunkt auf die Zylinderachse hin ausgerichtet sind.

In einer bevorzugten Ausführungsform ist eine Kontrollvorrichtung vorgesehen, welche die Mehrzahl der Auslassventile derart ansteuert, dass die Menge der im Brennraum verbleibenden Abgase minimiert wird.

Ferner ist es eine bevorzugte Ausgestaltung, dass jedes Auslassventil eine Ventilachse aufweist, wobei zumindest ein Auslassventil derart angeordnet ist, dass seine Ventilachse parallel zur Zylinderachse ausgerichtet ist.

In manchen Ausführungsformen ist jedes Auslassventil derart angeordnet, dass seine Ventilachse parallel zur Zylinderachse ausgerichtet ist.

In anderen Ausführungsformen kann jedes Auslassventil derart angeordnet, dass seine Ventilachse schräg zur Zylinderachse ausgerichtet ist. Das bedeutet, dass die jeweilige Ventilachse mit der Zylinderachse einen Winkel einschliesst, der grösser als Null Grad und kleiner als neunzig Grad ist. Eine solche schräge Anordnung kann insbesondere unter aerodynamischen Aspekten vorteilhaft sein.

Auch ist es eine bevorzugte Massnahme, dass die Mehrzahl der Auslassventile so angeordnet ist, dass die Auslassventile symmetrisch bezüglich der Zylinderachse angeordnet sind.

Vorzugsweise ist der längsgespülte Grossmotor als längsgespülter Grossdieselmotor ausgestaltet.

Auch ist es bevorzugt, wenn der erfindungsgemässe längsgespülte Grossmotor als längsgespülter Zweitakt-Grossmotor ausgestaltet ist.

Im Speziellen kann der erfindungsgemässe Grossmotor als längsgespülter Zweitakt-Grossdieselmotor ausgestaltet sein..

Besonders bevorzugt ist der Grossmotor als Dual-Fuel Grossdieselmotor ausgestaltet, der in einem Flüssigmodus betreibbar ist, in welchem ein flüssiger Brennstoff zur Verbrennung in den Brennraum eingebracht wird, und der ferner in dem Gasmodus betreibbar ist, in welchem ein Gas als Brennstoff in den Brennraum eingebracht wird.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine schematische Schnittdarstellung eines Ausführungsbeispiels eines erfindungsgemässen längsgespülten Grossmotors,
- Fig. 2:: eine Aufsicht auf den Zylinderdeckel des Ausführungsbeispiels vom Brennraum aus, und
- Fig. 3:: eine perspektivische Schnittdarstellung des Zylinderdeckels.

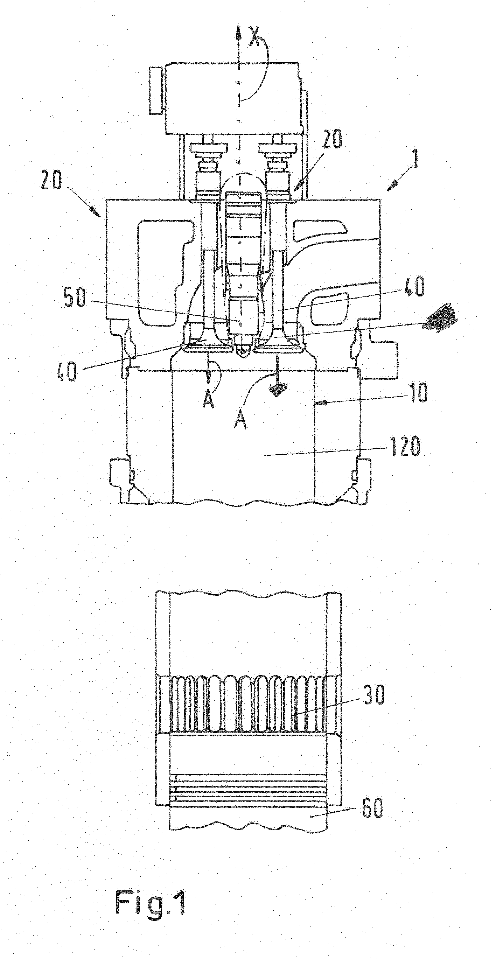

Fig. 1 zeigt in einer schematischen Schnittdarstellung ein Ausführungsbeispiel eines erfindungsgemässen längsgespülten Grossmotors, der gesamthaft mit dem Bezugszeichen 1 bezeichnet ist.

Der Grossmotor 1 umfasst mindestens einem, üblicherweise aber mehrere Zylinder 10, in denen der Verbrennungsprozess abläuft.

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder 10 eines Grossmotors 1 jeweils einen Innendurchmesser (Bohrung), der mindestens etwa 200 mm beträgt.

Der Grossmotor 1 kann als Viertakt- oder als Zweitakt-Motor ausgestaltet sein. Insbesondere kann der Grossmotor 1 als Grossdieselmotor ausgestaltet sein, speziell als längsgespülter Zweitakt-Grossdieselmotor. Mit dem Begriff "Grossdieselmotor" sind dabei solche Grossmotoren 1 gemeint, die in einem Dieselbetrieb betreibbar sind. Der Dieselbetrieb ist im idealisierten Grenzfall ein Gleichdruckprozess (Gleichdruckverbrennung), der auf einer Diffusionsverbrennung basiert. Im Dieselbetrieb erfolgt die Verbrennung des Brennstoffs üblicherweise nach dem Prinzip der Selbstzündung. Im Rahmen dieser Anmeldung sind mit dem Begriff "Grossdieselmotor" auch solche Grossmotoren 1 gemeint, die ausser im Dieselbetrieb alternativ auch in einem Ottobetrieb betrieben werden können. Der Ottobetrieb ist im idealisierten Grenzfall ein Gleichraumprozess (Gleichraumverbrennung), bei welchem die Verbrennung typischerweise nach dem Prinzip der Fremdzündung des Brennstoffs erfolgt. Auch ist es möglich, dass der Grossdieselmotor in Mischformen aus dem Dieselbetrieb und dem Ottobetrieb betrieben werden kann.

Selbstverständlich umfasst der Begriff "Grossmotor" auch solche Motoren, die als Gasmotoren ausgestaltet sind. Diese Gasmotoren sind nur für den reinen Gasbetrieb ausgestaltet, das heisst, sie werden nur mit einem gasförmigen Brennstoff, z. B. einem Erdgas, betrieben. Beispielsweise kann ein Gasmotor so ausgestaltet sein, dass sein Betrieb dem Betrieb eines Dual-Fuel Motors im Gasmodus entspricht.

Ferner wird mit dem Begriff "fremdgezündeter Brennstoff" ein solcher Brennstoff bezeichnet, der bestimmungsgemäss durch Fremdzündung im Zylinder 10 verbrennt, bei welchem also bestimmungsgemäss eine Selbstzündung vermieden werden soll. Im Unterschied dazu wird mit einem "selbstzündenden Brennstoff ein solcher Brennstoff bezeichnet, der bestimmungsgemäss durch Selbstzündung im Zylinder 10 verbrennt, also beispielsweise Schweröl oder Dieselbrennstoff.

Als "flüssiger Brennstoff" wird ein Brennstoff bezeichnet, der im flüssigen Zustand in den Zylinder 10 eingebracht wird. Als "gasförmiger Brennstoff" wird ein Brennstoff bezeichnet, der im gasförmigen Zustand in den Zylinder 10 eingebracht wird.

Bei der folgenden Beschreibung der Erfindung wird mit beispielhaftem Charakter auf den für die Praxis wichtigen Fall eines Grossdieselmotors 1 Bezug genommen, der als längsgespülter Zweitakt-Grossdieselmotor 1 ausgestaltet ist, und der als Hauptantriebsaggregat eines Schiffes verwendet wird. Dieser Grossdieselmotor 1 kann beispielsweise aber nicht notwendigerweise als Dual-Fuel Grossdieselmotor ausgestaltet sein, sodass er mit zwei unterschiedlichen Brennstoffen betreibbar ist, z. B. mit einem flüssigen Brennstoff wie Schweröl und mit einem gasförmigen Brennstoff, z. B. Erdgas. Der Dual-Fuel Grossdieselmotor 1 kann während des Betriebs vom Verbrennen des ersten Brennstoffs auf das Verbrennen des zweiten Brennstoffs umgeschaltet werden und umgekehrt.

Es versteht sich, dass die Erfindung nicht auf diesen Typ von Grossdieselmotor und auf diese Verwendung beschränkt ist, sondern längsgespülte Grossmotoren 1 im Allgemeinen betrifft. Dabei ist es auch möglich, dass der Grossmotor 1 nur für die Verbrennung eines einzigen Brennstoffs ausgestaltet ist. Der Grossmotor 1 kann beispielsweise als Gasmotor ausgestaltet sein, der nur für den Betrieb mit einem Gas als Brennstoff ausgestaltet ist. Auch ist es möglich, dass der Grossmotor 1 als Multi-Fuel Grossmotor ausgestaltet ist, der mit einem ersten Brennstoff betrieben werden kann, und der mit mindestens einem zweiten Brennstoff betrieben werden kann, der von dem ersten Brennstoff verschieden ist. Natürlich kann der Grossmotor 1 auch für die Verbrennung von mehr als zwei Brennstoffen ausgestaltet ist.

In jedem Zylinder 10 des Grossdieselmotors 1 ist jeweils ein Kolben 60 vorgesehen, der jeweils in Richtung der Zylinderachse X zwischen einem oberen und einem unteren Umkehrpunkt hin- und her bewegbar angeordnet ist, und dessen Oberseite gemeinsam mit einem Zylinderdeckel 20 einen Brennraum 120 begrenzt.

Der Kolben 60 ist in an sich bekannter Weise über eine Kolbenstange (nicht dargestellt) mit einem Kreuzkopf (nicht dargestellt) verbunden, welcher über eine Schubstange (nicht dargestellt) mit einer Kurbelwelle (nicht dargestellt) verbunden ist, sodass die Bewegung des Kolbens 60 über die Kolbenstange, den Kreuzkopf und die Schubstange auf die Kurbelwelle übertragen wird, um diese zu drehen.

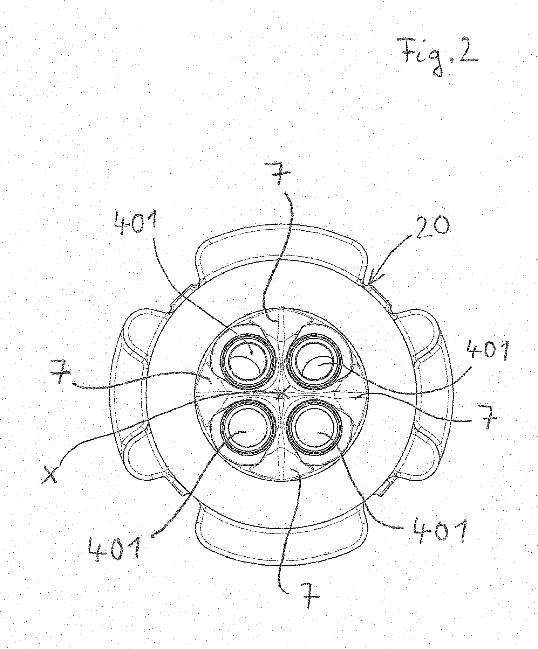

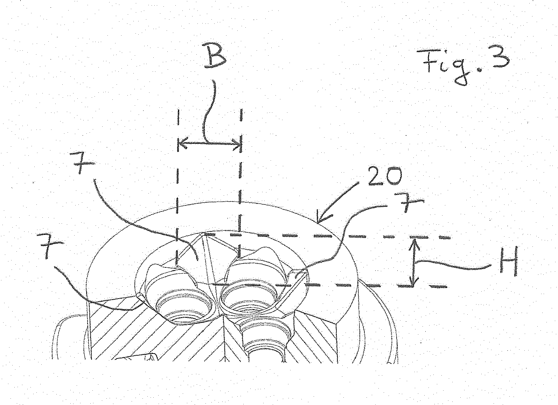

Im Zylinderdeckel 20 ist eine Mehrzahl von Auslassventilen 40 vorgesehen, durch welche die Verbrennungsgase nach dem Verbrennungsprozess aus dem Brennraum 120 des Zylinders 10 in eine Abgassammelleitung (nicht dargestellt) ausgetragen werden können. Jedes Auslassventil 40 erstreckt sich in Richtung einer jeweiligen Ventilachse A. In dem hier beschriebenen Ausführungsbeispiel sind in jedem Zylinder 10 jeweils vier Auslassventile 40 vorgesehen. Dies ist insbesondere in Fig. 2 zu erkennen, welche eine Aufsicht auf den Zylinderdeckel 20 vom Brennraum 120 aus zeigt. Zum besseren Verständnis zeigt Fig. 3 noch eine perspektivische Schnittdarstellung des Zylinderdeckels 20.

In den Fig. 2 und Fig. 3 sind jedoch aus Gründen der besseren Übersicht jeweils nur die Bohrungen 401 dargestellt, von denen jede ein Auslassventil 40 aufnimmt, nicht aber die Auslassventile 40 an sich. Wenn die Auslassventile 40 in der jeweiligen Bohrung 401 angeordnet sind, dann liegt die jeweilige Ventilachse A auf der jeweiligen Mittelachse der Bohrung 401, in welcher das Auslassventil 40 angeordnet ist.

In anderen Ausgestaltungen können in jedem Zylinder 10 auch weniger oder mehr als vier Auslassventile 40 vorgesehen sein, beispielsweise zwei oder drei Auslassventile oder fünf oder noch mehr Auslassventile.

Um eine möglichst gute Austragung der Abgase aus dem Brennraum 120 zu erzielen, ist es bevorzugt, dass die Mehrzahl der Auslassventile 40 symmetrisch bezüglich der Zylinderachse X angeordnet ist. Wie dies insbesondere Fig. 2 zeigt, sind die vier Auslassventile 40 in einer rechteckigen Struktur, insbesondere in einer quadratischen Struktur angeordnet. Die Ventilachsen A -bzw. die Mittelachsen der vier Bohrungen 401- sind so angeordnet, dass ihre Durchtrittspunkte in den Brennraum 120 auf einem Rechteck - hier auf einem Quadrat - liegen, dessen Mittelpunkt von der Zylinderachse X durchstossen wird.

Bei dem hier beschriebenen Ausführungsbeispiel sind die Auslassventile 40 so angeordnet bzw. sind die Bohrungen 401 so ausgestaltet, dass jede Ventilachse A jeweils parallel zur Zylinderachse X ausgerichtet ist. In anderen Ausgestaltungen ist es natürlich auch möglich, dass eine oder mehrere oder alle Ventilachsen schräg zur Zylinderachse verläuft/verlaufen. Jede schräg zur Zylinderachse verlaufende Ventilachse schliesst dann vorzugsweise mit der Zylinderachse einen Winkel ein, der grösser als 0° und kleiner als 90° ist.

Bei dem längsgespülten Zweitakt-Grossdieselmotors 1 sind im unteren Bereich eines jeden Zylinders 10 bzw. Zylinderliners jeweils Spülluftöffnungen 30, beispielsweise ausgestaltet als Spülluftschlitze, zum Zuführen von Spülluft in den Zylinder 10 vorgesehen, wobei die Spülluftöffnungen 30 durch die Bewegung des Kolbens 60 im Zylinder 10 periodisch verschlossen und geöffnet werden, sodass die von einem Turbolader (nicht dargestellt) in einem Einlassreceiver (nicht dargestellt) unter dem Ladedruck bereitgestellte Spülluft durch die Spülluftöffnungen 30 in den jeweiligen Zylinder 10 einströmen kann, solange diese geöffnet sind. Dies ist der Fall, wenn sich der jeweilige Kolben 60 im Bereich seines unteren Umkehrpunkts befindet.

Im Zylinderdeckel 20 ist ferner mindestens eine Brennstoffeinspritzdüse 50, vorgesehen, die im hier beschriebenen Ausführungsbeispiel zentral im Zylinderdeckel 20 angeordnet ist, sodass die Mittelachse der Brennstoffeinspritzdüse 50 auf der Zylinderachse X liegt. In anderen Ausgestaltungsformen können natürlich auch mehr als eine Brennstoffeinspritzdüse 50 für jeden Zylinder 10 vorgesehen sein.

Die Brennstoffeinspritzdüse 50 dient dazu, den flüssigen Brennstoff, beispielsweise Schweröl oder ein Dieselöl, in den Brennraum 120 des Zylinders 10 einzubringen. Während des Flüssigmodus wird also der flüssige Brennstoff mittels der Brennstoffeinspritzdüse 50 in den Brennraum 120 des Zylinders 10 eingespritzt.

Es ist ferner ein Gaszuführsystem (nicht dargestellt) vorgesehen, mit welchem das Gas in den Zylinder 10 einbringbar ist. Das Gaszuführsystem ist vorzugsweise als Niederdrucksystem ausgestaltet, welches das als Brennstoff dienende Gas mit einem Druck von höchsten 50 bar (5 MPa), vorzugsweise höchstens 20 bar (2 MPa) in den Zylinder einbringt. Das Gaszuführsystem umfasst mindestens eine Gaseinlassdüse welche an oder in der Wandung des Zylinders angeordnet ist. Vorzugsweise ist die Gaseinlassdüse bezüglich der Richtung der Zylinderachse X ungefähr in der Mitte zwischen dem oberen Umkehrpunkt und dem unteren Umkehrpunkt des Kolbens 60 angeordnet.

Im Gasmodus wird das Gas mittels des Gaszuführsystems in den Zylinder 10 eingebracht, vermischt sich dort mit der Spülluft und wird durch die Aufwärtsbewegung des Kolbens 60 komprimiert. Hierdurch entsteht im Brennraum 120 ein vorgemischtes Luft-Brennstoff-Gemisch, welches dann zu einem vorgebbaren Zeitpunkt bzw. bei einem vorgebbaren Kurbelwinkel fremdgezündet wird. Die Fremdzündung erfolgt vorzugsweise, indem im richtigen Moment eine kleine Menge flüssiger Brennstoff in den Brennraum 120 des Zylinders 10 oder in eine Vorkammer (nicht dargestellt) eingespritzt wird, sodass sich der flüssige Brennstoff im Brennraum 120 oder in der Vorkammer selbstentzündet, was dann zur Zündung des Luft-Gas-Gemisches im Brennraum 120 führt. Es können in an sich bekannter Weise mehrere Vorkammern vorgesehen sein, von denen jede mit dem Brennraum 120 strömungsverbunden ist. Wir dann der selbstzündende Brennstoff in jede diese Kammern eingebracht, so kann das Luft-Brennstoff-Gemisch im Brennraum 120 an verschiedenen Stellen fremdgezündet werden.

Anstelle der Fremdzündung durch das Einbringen eines selbstzündendes Brennstoffs ist es natürlich auch möglich, die Fremdzündung durch eine elektrische Zündung, beispielsweise eine Zündkerze, zu erzielen

Der weitere Aufbau und die einzelnen Komponenten des Grossdieselmotors wie beispielsweise Einzelheiten des Einspritzsystems, das Gaswechselsystem, das Abgassystem oder das Turboladersystem für die Bereitstellung der Spül- bzw. Ladeluft, sowie das Kontroll- und Steuerungssystem für einen Grossdieselmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Das Kontroll- und Steuerungssystem ist in modernen Grossdieselmotoren ein elektronisches System, mit welchem sich üblicherweise alle Motor- oder Zylinderfunktionen, insbesondere die Einspritzung (Beginn und Ende der Einspritzung), die Einbringung des gasförmigen Brennstoffs und die Betätigung der Auslassventile, einstellen oder steuern bzw. regeln lassen. Im hier beschriebenen Ausführungsbeispiel umfasst das Kontroll- und Steuerungssystem eine Kontrollvorrichtung mit welcher jedes der Auslassventile 40 zum Öffnen bzw. zum Schliessen angesteuert werden kann. Dabei ist es bevorzugt, dass die Kontrollvorrichtung alle Auslassventile 40 gleichzeitig, das heisst synchron ansteuert, sodass sich alle Auslassventile 40 möglichst synchron bewegen.

Es ist auch möglich, dass die Kontrollvorrichtung jedes der Auslassventile 40 einzeln und unabhängig von den jeweils anderen Auslassventilen 40 ansteuern kann.

Erfindungsgemäss ist zwischen zwei benachbarten Auslassventilen 40 bzw. zwischen zwei benachbarten Bohrungen 401 für die Auslassventile 40 jeweils eine Erhebung 7 am Zylinderdeckel 20 vorgesehen. Diese Erhebungen 7 tragen wesentlich dazu bei, das Strömungsprofil im Zylinder 10 zu verbessern. Die Kombination der Mehrzahl der Auslassventile 40 mit den jeweils dazwischen angeordneten Erhebungen 7 führt dazu, dass Zonen mit sehr niedrigen Strömungsgeschwindigkeiten oder Stagnationszonen zumindest deutlich reduziert werden. Die Verteilung der Strömungsgeschwindigkeiten über den Querschnitt des Zylinders 10 gesehen wird wesentlich homogener. Das heisst das Strömungsprofil wird flacher. Die Abgase können aus allen Bereichen des Brennraums 120 zuverlässig ausgetragen werden. Dies hat auch zur Folge, dass die Übergangszone zwischen der Frischen Spülluft und den Abgasen im Zylinder deutlich schmäler und damit deutlich kleiner wird. Der Übergang von frischer Spülluft zu Abgasen wird signifikant schärfer, sodass auch der Wärmeaustausch zwischen den heissen Abgasen und der wesentlich kühleren Spülluft reduziert wird. Dies bedeutet im Vergleich zu konventionellen Ausgestaltungen, dass die Abgase heisser bleiben, was ein vorteilhafter Aspekt im Hinblick auf die Effizienz nachgeschalteter Abgasreinigungssystem ist, und dass die Spülluft im Zylinder 10 kühler bleibt, was ein positiver Effekt im Hinblick auf unerwünschte Selbstzündungen oder eine zu schnelle Verbrennung insbesondere im Gasmodus ist.

Die insgesamt vier Erhebungen 7, von denen jede jeweils zwischen zwei benachbarten Auslassventilen 40 bzw. zwischen zwei benachbarten Bohrungen 401 angeordnet ist, erstrecken sich jeweils von dem Zylinderdeckel 20 in den Brennraum 120 hinein. Gemäss einer bevorzugten Ausgestaltung erstreckt sich jede Erhebung 7 von dem Zylinderdeckel 20 in radialer Richtung auf die Zylinderachse X zu.

Jede Erhebung 7 ist so ausgestaltet, dass ihre Höhe H, womit die Erstreckung in Richtung der Zylinderachse X bezeichnet wird, vom Zylinderdeckel 20 in Richtung auf die Zylinderachse X hin abnimmt, das heisst die Höhe H ist maximal am Zylinderdeckel 20, speziell am radial aussenliegenden Bereich des Zylinderdeckels 20 und nimmt dann, vorzugsweise kontinuierlich, ab.

Ferner ist die Ausgestaltung bevorzugt, dass die Breite B jeder Erhebung 7 in Richtung auf die Zylinderachse X hin abnimmt. Mit der Breite B ist dabei die Erstreckung der Erhebung in einer Richtung gemeint, die sowohl auf der radialen Richtung als auch auf der Zylinderachse X senkrecht steht. Diese Richtung ist näherungsweise die Umfangsrichtung. Die Breite B jeder Erhebung 7 ist also am Zylinderdeckel 20 maximal, speziell am radial aussenliegenden Bereich des Zylinderdeckels, und nimmt dann, vorzugsweise kontinuierlich, ab.

Beide geometrischen Bedingungen lassen sich beispielsweise dadurch realisieren, dass jede Erhebung 7 im Wesentlichen als Tetraeder ausgestaltet ist, also aus vier Dreiecken besteht, was natürlich nicht im streng mathematischen Sinne zu verstehen ist. Dabei ist die Grundfläche des Tetraeders jeweils radial aussenliegend am Zylinderdeckel 20 angeordnet, und der Scheitelpunkt des Tetraeders ist radial innenliegend angeordnet, sodass die Erhebungen 7 mit ihrem Scheitelpunkt auf die Zylinderachse X hin ausgerichtet sind. Dabei erstreckt sich vorzugsweise eine "Kante" des jeweiligen Tetraeders in radialer Richtung.

## Patentansprüche

1. Längsgespülter Grossmotor mit mindestens einem Zylinder (10), in welchem ein Kolben (60) entlang einer Zylinderachse (X) hin und her bewegbar angeordnet ist, mit einem Zylinderdeckel (20), welcher gemeinsam mit dem Kolben (60) einen Brennraum (120) für einen Brennstoff begrenzt, wobei der Grossmotor für den Betrieb in einem Gasmodus ausgestaltet ist, in welchem ein vorgemischtes Luft-Brennstoff-Gemisch im Brennraum (120) verbrannt wird, wobei im Zylinderdeckel (20) eine Mehrzahl von Auslassventilen (40) zum Ausbringen von Abgasen aus dem Brennraum (120) vorgesehen ist, **dadurch gekennzeichnet, dass** zwischen zwei benachbarten Auslassventilen (40) jeweils eine Erhebung am Zylinderdeckel (20) vorgesehen ist, welche sich in den Brennraum (120) hinein erstreckt.

2. Längsgespülter Grossmotor nach Anspruch 1, bei welchem der Zylinder (10) vier Auslassventile (40) aufweist, welche in dem Zylinderdeckel (20) angeordnet sind.

3. Längsgespülter Grossmotor nach Anspruch 2, wobei die vier Auslassventile (40) in einer rechteckigen Struktur angeordnet sind.

4. Längsgespülter Grossmotor nach einem der vorangehenden Ansprüche, wobei sich jede Erhebung (7) in einer radialen Richtung auf die Zylinderachse (X) zu erstreckt.

5. Längsgespülter Grossmotor nach Anspruch 4, wobei jede Erhebung (7) derart ausgestaltet ist, dass ihre Höhe (H) gemessen senkrecht zur radialen Richtung auf die Zylinderachse (X) hin gesehen abnimmt.

6. Längsgespülter Grossmotor nach Anspruch 4 oder 5, wobei jede Erhebung (7) derart ausgestaltet ist, dass ihre Breite (B) gemessen senkrecht zur radialen Richtung auf die Zylinderachse (X) hin gesehen abnimmt.

7. Längsgespülter Grossmotor nach einem der vorangehenden Ansprüche, wobei jede Erhebung (7) im Wesentlichen als Tetraeder ausgestaltet ist, wobei die Grundfläche des Tetraeders jeweils radial aussenliegend angeordnet ist und der Scheitelpunkt des Tetraeders radial innenliegend angeordnet ist, sodass die Erhebungen (7) mit ihrem Scheitelpunkt auf die Zylinderachse (X) hin ausgerichtet sind.

8. Längsgespülter Grossmotor nach einem der vorangehenden Ansprüche, wobei eine Kontrollvorrichtung vorgesehen ist, welche die Mehrzahl der Auslassventile (40) derart ansteuert, dass die Menge der im Brennraum (120) verbleibenden Abgase minimiert wird.

9. Längsgespülter Grossmotor nach einem der vorangehenden Ansprüche, wobei jedes Auslassventil (40) eine Ventilachse (A) aufweist, und wobei zumindest ein Auslassventil (40) derart angeordnet ist, dass seine Ventilachse(A) parallel zur Zylinderachse (X) ausgerichtet ist.

10. Längsgespülter Grossmotor nach Anspruch 9, wobei jedes Auslassventil (40) derart angeordnet ist, dass seine Ventilachse (A) parallel zur Zylinderachse (X) ausgerichtet ist.

11. Längsgespülter Grossmotor nach einem der vorangehenden Ansprüche, wobei die Mehrzahl der Auslassventile (40) so angeordnet ist, dass die Auslassventile (40) symmetrisch bezüglich der Zylinderachse (X) angeordnet sind.

12. Längsgespülter Grossmotor nach einem der vorangehenden Ansprüche ausgestaltet als längsgespülter Grossdieselmotor.

13. Längsgespülter Grossmotor nach einem der vorrangehenden Ansprüche, ausgestaltet als längsgespülter Zweitakt-Grossmotor.

14. Längsgespülter Grossmotor nach einem der vorrangehenden Ansprüche, ausgestaltet als längsgespülter Zweitakt-Grossdieselmotor.

15. Längsgespülter Grossmotor nach einem der vorrangehenden Ansprüche, ausgestaltet als Dual-Fuel Grossdieselmotor, der in einem Flüssigmodus betreibbar ist, in welchem ein flüssiger Brennstoff zur Verbrennung in den Brennraum (120) eingebracht wird, und der ferner in dem Gasmodus betreibbar ist, in welchem ein Gas als Brennstoff in den Brennraum (120) eingebracht wird.
